# DEMANDE DE BREVET EUROPEEN

(11) **EP 2 357 618 A1**
(43) Date de publication de la demande: **17.08.2011**
(21) Numéro de dépôt: 11154515.8
(22) Date de dépôt: 15.02.2011
(51) Int. Cl.: G06T 15/50, G09B 9/00

(54) **Rendu d'une scène tridimensionnelle avec anti-crenelage**

(30) Priorité: 16.02.2010 FR 1000648
(71) Demandeur: Thales, 92200 Neuilly Sur Seine (FR)
(72) Inventeur: Pei Xing, Dongmei, 94100, SAINT MAUR DES FOSSES (FR)
(74) Mandataire: Lucas, Laurent Jacques

(57) **Abrégé**

La présente invention concerne un procédé de production d'images en deux dimensions (62), en temps réel. Le procédé selon l'invention est notamment mis en oeuvre par une application de simulation (60) utilisant une carte graphique (61) pour générer lesdites images (62) en temps réel. Des objets générés par l'application de simulation (60), composant une scène à afficher, comportent des objets standards et des objets d'intérêt pour la simulation. Les objets standards sont traités directement par la carte graphique (61). Les objets d'intérêts sont traités de manière plus fine en utilisant des moyens de calculs de la carte graphique (61), gérés par l'application (60).

## Description

La présente invention concerne un procédé de production d'images en deux dimensions, en temps réel. L'invention s'applique notamment à des systèmes visuels utilisés dans des simulateurs de vol ou de conduite.

Des simulateurs de vol ou de conduite peuvent avoir pour objet d'entrainer du personnel à la conduite d'engins comme des camions, des avions, des hélicoptères. La conduite de certains engins comme les avions, nécessite un entrainement très sérieux. En effet, le matériel confié au pilote est parfois très coûteux. De plus l'engin peut également être un moyen de transport de personne, dans ce cas le pilote de l'engin est responsable de vies humaines. Il est donc nécessaire d'obtenir une excellente qualification du personnel conduisant de tels engins.
Dans les simulateurs, la reproduction visuelle de l'environnement du ou des pilotes est un point important pour obtenir une simulation de qualité.
Le marché des systèmes de reproduction visuelle adaptés aux simulateurs est en pleine expansion. Dans ce contexte, les fabricants de systèmes de reproduction visuelle adaptée aux simulateurs utilisent de plus en plus des matériels du commerce pour traiter les images afin de réduire les coûts de production. En effet, certains produits du commerce, comme les cartes graphiques, peuvent permettre d'obtenir une qualité d'image proche d'un produit entièrement développé par un fabriquant de simulateurs. Sur certaines cartes graphiques, le niveau de qualité de l'image finale peut être réglé selon par exemple que l'on souhaite avoir de meilleures performances en temps de calcul ou que l'on souhaite privilégier la qualité de l'image.

Cependant les images produites par des cartes graphiques du commerce possèdent un aliasing géométrique important. Un aliasing géométrique est un effet d'escalier sur l'affichage des bordures des objets d'une image. Le problème de l'aliasing géométrique est très net sur des objets fins ou de petite taille. Or des objets fins ou de petite taille peuvent être très importants pour une simulation : par exemple un aliasing important sur des marquages d'une piste d'atterrissage peut être un facteur très perturbant pour un pilote d'aéronef en entrainement. De plus dans des images comprenant d'importants mouvements, les objets fixes et fins peuvent disparaître. Une telle disparition d'objets est très pénalisante pour la qualité d'une simulation.
Plusieurs solutions techniques existent afin de limiter l'aliasing géométrique dans une image.

Une première méthode d'anti-aliasing est nommée FSAA, acronyme pour l'expression anglo-saxonne Full Scene Anti-Aliasing, signifiant anti-aliasing sur une scène complète. La méthode FSAA utilise une image en deux dimensions d'une résolution n fois supérieure à la résolution finale, n étant un entier strictement supérieur à un. Prenons par exemple n valant quatre. La méthode FSAA utilise donc une image initiale d'une résolution en (x,y) quatre fois supérieure à la résolution de l'image finale. Ainsi pour chaque pixel de l'image finale, on dispose de quatre pixels de l'image initiale de haute résolution. Les quatre pixels de l'image initiale sont nommés les échantillons. Ensuite on applique à cette image initiale un filtre passe-bas, par exemple, pour éliminer les hautes fréquences de l'image. Filtrer une image haute résolution pour obtenir une image d'une résolution inférieure, revient à effectuer un « down-sampling », expression anglo-saxonne pour sous-échantillonnage. Cette méthode est limitée par les capacités matérielles de la carte graphique utilisée. En effet, pour obtenir une image de bonne qualité, présentant peu d'aliasing, il faut prendre une image initiale ayant une résolution importante. Les calculs sur cette image sont alors coûteux en temps et ne permettent pas un affichage d'images en temps réel. De plus la résolution maximale d'une image est limitée, on ne peut donc pas utiliser une image initiale à la résolution supérieure pour avoir une meilleure qualité d'image.

Une deuxième méthode pouvant être utilisée est une méthode MSAA, acronyme pour l'expression anglo-saxonne Multi Sampling Anti Aliasing signifiant échantillonnage multiple anti-aliasing. La méthode MSAA est une optimisation de la méthode FSAA. La géométrie des objets de l'image initiale est construite à l'aide de polygones. Au lieu d'avoir n échantillons pour tous les pixels d'image finale, la méthode MSAA est appliquée uniquement sur les bords de ces polygones. De plus, l'échantillonnage multiple n'est appliqué que sur la géométrie, on ne génère qu'un échantillon de couleur par pixel. Ainsi on compose un masque de couverture à partir des n échantillons de la géométrie pour chaque pixel disponible pour l'affichage et la couleur finale du pixel est la multiplication de l'échantillon de couleur par le masque de couverture.
La méthode MSAA peut être couplée avec une méthode CSAA, acronyme pour l'expression anglo-saxonne Coverage Sampling Anti-aliasing, signifiant Echantillonnage anti-aliasing d'opacité. La méthode CSAA consiste à utiliser un buffer, pour la couverture des pixels, différent du buffer comportant les couleurs de l'image initiale, tel qu'utilisé par le MSAA. Cette méthode permet, en découplant le buffer comportant les données de couverture sur lesquelles sont appliquées le traitement anti-aliasing, de réduire la bande passante utilisée par le traitement anti-aliasing.
Dans cette deuxième méthode, ainsi que dans sa combinaison avec une méthode CSAA, ne peuvent être utilisés qu'un nombre limité d'échantillons par pixel. De plus l'utilisation d'un MSAA avec un nombre élevé n d'échantillons est très coûteuse en temps de calcul. Il est donc impossible par ces méthodes d'obtenir la précision souhaitée pour l'image à afficher, en même temps qu'un fonctionnement en temps réel.

Un but de l'invention est notamment de produire des images en deux dimensions, en temps réel. Le procédé selon l'invention est notamment mis en oeuvre par une application de simulation utilisant une carte graphique pour générer lesdites images en temps réel. Des objets générés par l'application de simulation, composant une scène à afficher, comportent des objets standards et des objets d'intérêt pour la simulation. Les objets standards sont traités directement par la carte graphique. Les objets d'intérêts sont traités de manière plus fine en utilisant des moyens de calculs de la carte graphique, gérés par l'application.
A cet effet, l'invention a pour objet un procédé de production d'images en temps réel par une application de simulation utilisant une carte graphique pour générer lesdites images en temps réel. Lesdites images comportent notamment des objets standards et des objets d'intérêt pour la simulation. Le procédé selon l'invention comporte au moins les étapes suivantes pour chaque image :
- calcul par la carte graphique des couleurs des pixels de l'image pour représenter les objets standards, stockage des couleurs des pixels pour représenter les objets standards, dans une mémoire tampon de la carte graphique ;
- pour chaque objet d'intérêt :
   o calcul d'au moins deux matrices de projection de l'objet d'intérêt dans un plan image par l'application, lesdites matrices étant décalées spatialement l'une par rapport à l'autre ;
   o pour chaque matrice précédemment calculée, calcul par la carte graphique de deuxièmes masques de couverture des pixels du plan image ;
   o cumul par l'application des deuxièmes masques de couverture des pixels de l'image par l'objet d'intérêt dans la mémoire tampon de la carte graphique ;
   o calcul par la carte graphique de couleurs du plan image pour les pixels représentant l'objet d'intérêt ;
   o cumul par l'application, des couleurs de l'objet d'intérêt dans la mémoire tampon de la carte graphique ;
- Affichage par la carte graphique de la mémoire tampon.

Une pondération peut être avantageusement appliquée à chaque masque de couverture calculé pour une matrice de projection lors du cumul par l'application des deuxièmes masques de couverture.
Dans un autre mode de réalisation avantageux, les matrices de projection peuvent être spatialement décalées entre chaque image.
Chaque matrice de projection peut par exemple être centrée sur un échantillonnage d'un objet cible à afficher par un pixel.

L'invention a notamment pour principaux avantages d'améliorer la qualité des images produites, en ayant un affichage en temps réel de ces images.

D'autres caractéristiques et avantages de l'invention apparaîtront à l'aide de la description qui suit, donnée à titre illustratif et non limitatif, et faite en regard des dessins annexés qui représentent :
- la figure 1 : des éléments essentiels pour une génération d'images selon l'état de la technique ;
- la figure 2 : un exemple d'un masque de couverture calculé à partir de quatre échantillons selon l'état de la technique ;
- la figure 3 : un exemple de sur-échantillonnage selon l'invention ;
- la figure 4 : un exemple de déplacement de plan image pour un calcul de masque de couverture selon l'invention ;
- la figure 5 : un masque de couverture calculé par le procédé selon l'invention ;
- la figure 6 : une représentation schématique du fonctionnement d'une application produisant des images ;
- la figure 7 : un ordinogramme des principales étapes du procédé selon l'invention ;
- la figure 8 : un premier exemple de calcul de rendu d'image d'après le procédé selon l'invention ;
- la figure 9 : un deuxième exemple de calcul de rendu d'image
   d'après le procédé selon l'invention.

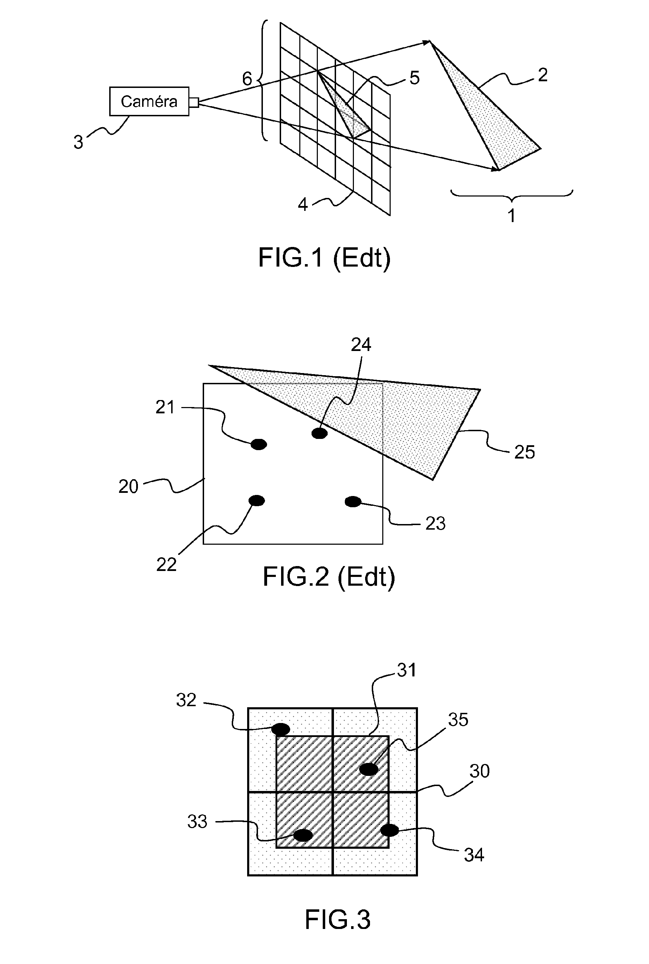

La figure 1 représente schématiquement une génération d'une image par une carte graphique. L'image générée représente une scène 1. Une scène 1 peut être composée d'un ou plusieurs objets 2 en trois dimensions. Les objets 2 en trois dimensions peuvent être modélisés sous forme de polygones. Une caméra 3 peut projeter sur un écran des images générée de la scène 1. A cette fin, un procédé de génération d'images construit un plan image 4 comportant une image 5 de la scène 1. C'est le plan image 4 qui, une fois construit, est projeté sur un écran de visualisation. Le plan image 4 est composé d'un ensemble de pixels 6. Chaque pixel est associé à une couleur en RVB, acronyme pour Rouge Vert Bleu. Chaque pixel est également associé à une composante d'opacité nommée alpha. Un plan alpha est un ensemble de composantes alpha pour chaque pixel du plan image. Une valeur de la composante d'opacité, aussi nommée valeur alpha, peut représenter une couverture d'un pixel par une projection 5 du polygone 2 sur le plan image 4. La projection 5 du polygone 2 sur le plan image 4 est une image 5 du polygone 2. L'ensemble des polygones composants la scène 1 est donc projeté sur le plan image 4. La projection de chaque polygone sur le plan image 4 colorie chaque pixel du plan image 4 en fonction de la couverture de chaque pixel par un ou plusieurs polygones projetés.
Un procédé bien connu de conversion d'un polygone projeté sur un plan image en une couverture de pixels est appelé rastérisation. De manière générale, la rastérisation est un procédé convertissant une image vectorielle en une image matricielle destinée à être affichée sur un écran. La qualité de rendu d'une image par un procédé de rastérisation dépend du nombre d'échantillons de l'image 5, utilisés pour calculer la couleur et la couverture d'un pixel par l'image 5. Par exemple, il est nécessaire d'utiliser plusieurs échantillons par pixel pour éviter des effets d'escalier dans le rendu final de l'image projetée sur l'écran. Les effets d'escaliers sont couramment nommés effets d'aliasing. De manière générale, un rendu d'une image est une représentation d'un modèle en trois dimensions de la scène par un affichage et un traitement des surfaces du modèle à partir de paramètres de texture, de couleur, d'éclairage et d'ombrage.

La figure 2 représente un exemple d'un premier masque de couverture 20 d'un pixel calculé à partir de quatre échantillons 21, 22, 23, 24 d'une géométrie polygonale 25. Le premier masque de couverture 20 représente la valeur alpha du pixel. Les quatre échantillons représentés pour l'exemple sur la figure 2 n'ont pas d'intersection avec la géométrie 25, la valeur alpha de couverture du pixel par la géométrie est donc nul.
Le premier masque de couverture 20 peut être obtenu par une méthode d'échantillonnage MSAA, acronyme pour l'expression anglo-saxonne Multi Sampling Anti Aliasing, signifiant échantillonnage multiple anti-aliasing. Une méthode d'échantillonnage MSAA est en générale fournie par les cartes graphiques selon l'état de la technique. Il est possible de choisir le nombre d'échantillons désiré pour la rastérisation par la méthode MSAA en fonction de contraintes de qualité et de performances. Cependant, le nombre d'échantillons utilisables par un procédé MSAA peut être limité par les performances matérielles de la carte graphique. De plus, une utilisation de plus de huit échantillons ralenti considérablement les performances de la génération d'images.
Une solution pour obtenir un nombre d'échantillons supérieur à celui autorisé par la carte graphique peut être d'augmenter artificiellement la résolution d'image. Une image, par exemple quatre fois plus grande que l'image 5 du plan image 4, peut être générée dans un plan image intermédiaire. Le plan image intermédiaire est un plan image temporaire. Cependant il existe également une limitation matérielle à la taille de l'image générée dans le plan image intermédiaire. De plus, pour générer une image de résolution supérieure, il est nécessaire d'avoir recourt à beaucoup de mémoire graphique. Or la mémoire graphique est coûteuse. Cette solution conduit également à une dégradation des performances de génération d'images.

La figure 3 représente un exemple d'une zone de sur-échantillonnage 30 selon l'invention. Un des principes du procédé selon l'invention est d'utiliser des procédés usuels proposés par la carte graphique pour représenter des objets de la scène, peu discriminants pour l'entrainement, et d'appliquer un traitement particulier pour certains objets de la scène. Par exemple, dans une simulation d'entrainement d'un pilote d'avion, certains objets comme les balises de piste, les bordures de pistes, doivent être représentés de la manière la plus fine possible. En effet, l'attention du pilote au cours d'un atterrissage est concentrée sur les objets signalant ou délimitant la piste d'atterrissage. D'autres objets faisant partie du décor comme des bâtiments lointains, une tour de contrôle, ne nécessitent pas un affichage très précis au cours de l'atterrissage. Le traitement d'affichage selon l'invention effectue un sur-échantillonnage géométrique des objets discriminants. Le sur-échantillonnage proposé utilise un déplacement du plan image pour chaque sur-échantillon. Tout d'abord, il s'agit de positionner les sur-échantillons. Une zone de sur-échantillonnage est définie en unité de pixels, ensuite, les sur-échantillons sont répartis par exemple de manière uniforme sur la zone de sur-échantillonnage. Par exemple, la figure 3 représente une zone de sur-échantillonnage 30 représentant 1,5 pixel. La zone de sur-échantillonnage 30 est centrée sur un pixel 31. Dans la zone de sur-échantillonnage 30, par exemple quatre premiers sur-échantillons 32, 33, 34, 35 peuvent être prélevés. Par exemple, la zone de sur-échantillonnage 30 peut être divisée en quatre parties égales. Une position de sur-échantillonnage peut ensuite être tirée de manière aléatoire dans chaque partie de la zone de sur-échantillonnage 30.

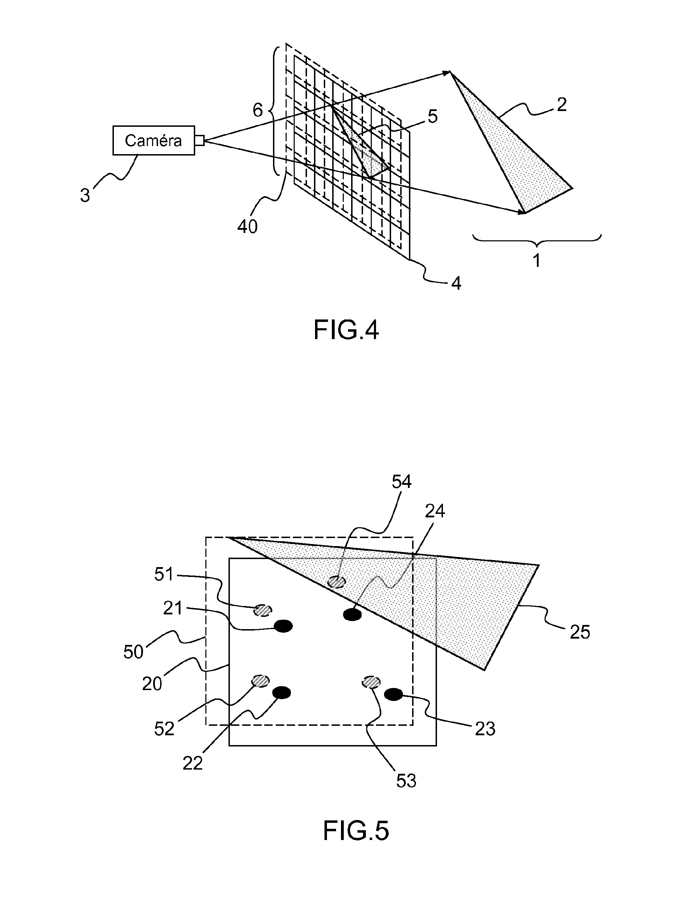

La figure 4 représente un exemple d'un déplacement du plan image 4 pour un calcul de masque de couverture selon l'invention. Pour générer des sur-échantillons d'objets cibles, le procédé selon l'invention utilise un déplacement du plan image 4, tel que représenté sur la figure 1. Le plan image 4 peut être déplacé selon une translation vectorielle par exemple. Un déplacement du plan image 4 peut par exemple être effectué de telle manière que le centre de chaque pixel 6 corresponde à un positionnement d'un sur-échantillon 32, 33, 34, 35 tel que représenté sur la figure 3. Le déplacement du plan image 4 donne un plan image décalé 40 représenté sur la figure 4.

La figure 5 représente un exemple d'un deuxième masque de couverture 50 calculé à partir de quatre deuxièmes sur-échantillons 51, 52, 53, 54, 55 pris dans le plan image décalé 40, représenté sur la figure 4. Les quatre deuxièmes sur-échantillons 51, 52, 53, 54 peuvent être prélevés dans le plan image décalé 40 de la même manière que les quatre premiers échantillons 21, 22, 23, 24 du plan image 4. Le masque calculé en utilisant les quatre deuxièmes sur-échantillons 51, 52, 53, 54 est plus précis. En effet, un des deuxièmes sur-échantillons 54 est positionné sur la géométrie polygonale 25.
La géométrie polygonale 25 comporte une intersection avec le deuxième masque de couverture 50. La valeur de couverture des pixels calculée avec le deuxième masque de couverture 50 est donc non nulle. Avantageusement la valeur de couverture calculée à partir du premier masque de couverture 20 et du deuxième masque 50 permet d'apporter une précision supplémentaire au calcul des masques de couverture.

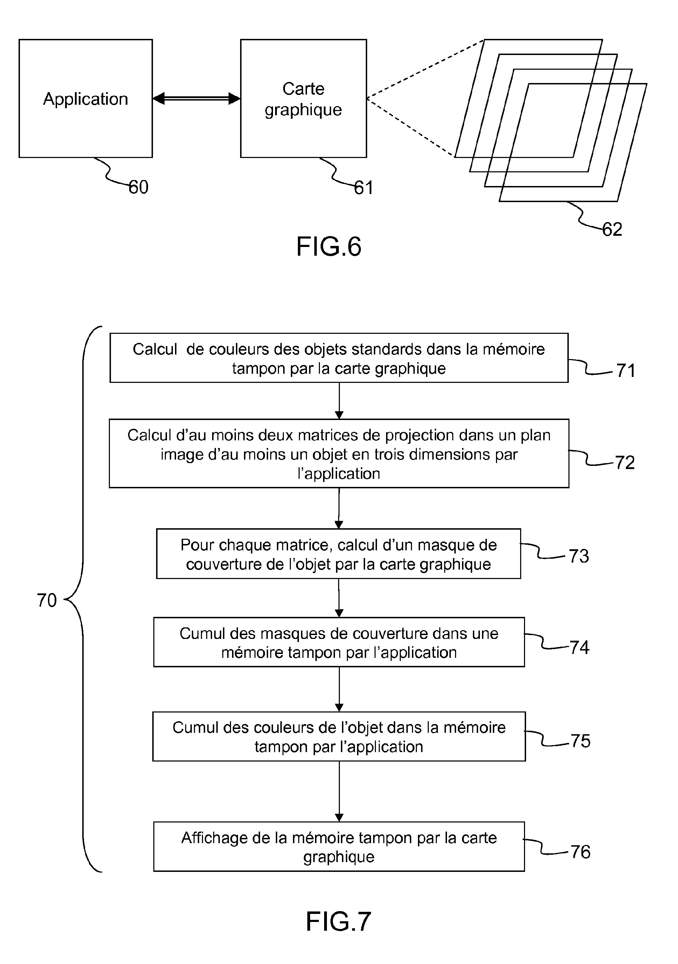

La figure 6 représente de manière schématique un fonctionnement d'une application 60 produisant des images. L'application 60 peut, par exemple, mettre en oeuvre le procédé selon l'invention pour produire une succession temporelle d'images 62. L'application 60 peut être une application de simulation, générant des images destinées à reproduire un environnement visuel pour une simulation. Par exemple l'application 60 peut générer des images destinées à être projetées sur un écran simulant un environnement pour un pilote d'un aéronef. A cette fin l'application gère des objets virtuels en trois dimensions modélisant un environnement dans lequel l'aéronef peut évoluer. L'application 60 utilise la carte graphique 61 pour calculer des masques de couvertures de différents objets de la scène à afficher sur un écran. Notamment, les polygones des objets sont convertis en masque de couverture par un procédé standard de rastérisation mis en oeuvre par la carte graphique 61. Les couvertures calculées sont stockées dans les composantes alpha du plan image, à afficher par le procédé de rastérisation. L'application 60 utilise des premières fonctions de « blending », expression anglo-saxonne signifiant mélange, fournies par la carte graphique 61, afin de cumuler les différents masques de couverture calculés par l'application 60, notamment : les masques de couverture calculés pour le plan image 4, les masques de couverture calculés pour le plan image déplacé 40, représentés sur la figure 4. L'application 60 utilise également des deuxièmes fonctions de « blending » pour combiner un rendu d'objets cibles avec le reste de la scène. Les objets cibles sont par exemple des objets d'intérêt opérationnel ayant fait l'objet d'un sur-échantillonnage selon l'invention. Les objets cibles peuvent également être des objets sensibles à l'aliasing, comme des objets fins. Le reste de la scène peut être rendu directement par la carte graphique 61 sans traitement spécifique de la part de l'application 60. La carte graphique 61 peut utiliser un procédé de rastérisation de type MSAA. Le plan image à afficher est lui-même stocké dans une mémoire tampon, couramment nommée « frame buffer » en langage anglo-saxon, et signifiant littéralement mémoire d'image. Dès qu'une image est entièrement calculée, l'application 60 demande à la carte graphique 61 d'afficher l'image calculée. La carte graphique 61 affiche alors les données contenues dans le frame buffer. Les différents échanges entre l'application 60 et la carte graphique 61 sont détaillés par la suite.

La figure 7 représente des étapes générales du procédé 70 de production d'images selon l'invention. Le procédé selon l'invention produit des images représentant une scène 1 pouvant évoluer en temps réel. La scène, à un instant donné, peut comporter un ensemble d'objets à reproduire. Parmi les objets à reproduire, un sous-ensemble d'objets particuliers est défini. Par exemple le sous-ensemble d'objets particuliers peut comporter des objets ayant une importance capitale pour la simulation, des objets difficiles à rendre sans dégradation de leur image. Les objets particuliers peuvent par exemple être définis dans une base de données. Les objets particuliers sont par la suite nommés objets cibles. Les objets ne faisant pas partis des objets cibles de la scène 1 sont nommés ci-après objets standards.
Une première étape 71 du procédé selon l'invention 70 peut être une étape de rendu en couleur pour les objets standards. Le rendu pour les objets standards peut être effectué par des méthodes de rastérisation et de rendu standard de la carte graphique 61.
Une deuxième étape 72 du procédé selon l'invention 70 peut être une étape de calcul de matrices de projection d'objets cibles sur un premier plan image 4 par l'application 60. Une matrice de projection permet de projeter des objets, par exemple à partir de la caméra 3, sur le plan image 4. Une matrice de projection comporte un maillage, dont chaque maille représente un pixel du plan image 4. Plusieurs matrices de projection peuvent être définies. Par exemple quatre matrices de projection peuvent être calculées, chacune comportant un maillage différent. Les maillages des différentes matrices de projection peuvent être décalés l'un par rapport à l'autre d'une fraction de pixel dans un sens défini par exemple. Un décalage entre deux maillages de pixels est représenté sur la figure 4 entre le plan image 4 et le plan image décalé 40.
Une troisième étape 73 du procédé selon l'invention 70 peut être une étape de calcul d'un masque de couverture pour chaque matrice de projection et pour chaque objet cible de la scène. Le calcul du masque de couverture pour chaque matrice est effectué par la carte graphique 61, sur requête de l'application 60.
Une fois les masques de couverture calculés pour chaque matrice de projection, une quatrième étape 74 peut être une étape de cumul des masques de couvertures des objets cibles dans un buffer d'affichage, ou mémoire tampon d'affichage, gérée par la carte graphique 61. Le cumul des masques de couverture calculés est assuré par la carte graphique 61 sur requête de l'application 60.
Une cinquième étape 75 peut être une étape de cumul des couleurs des objets cibles et standards dans le buffer d'affichage géré par la carte graphique 61 à l'aide du cumul des masques calculé lors de la quatrième étape 74. Le cumul des couleurs peut être réalisé par la carte graphique 61 sur requête de l'application 60.

Lorsque le buffer d'affichage contient l'ensemble des objets de la scène, il est transmis par exemple à un projecteur, par la carte graphique 61, pour l'affichage d'image 62 : c'est la sixième étape 76 du procédé selon l'invention.

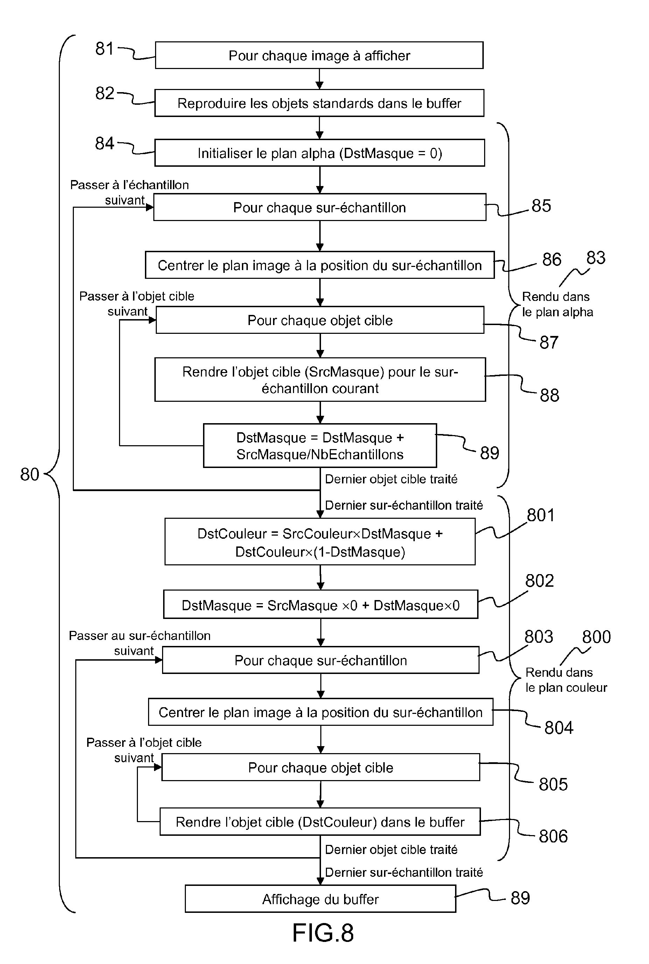

La figure 8 représente un premier exemple 80 de mise en oeuvre du procédé de production d'images 70 selon l'invention.
Le premier exemple de mise en oeuvre du procédé de production d'images 70 selon l'invention effectue un traitement pour chaque image de la scène 1 à afficher 81.
Un objectif d'une septième étape 82 du premier exemple 80 peut être de reproduire chaque objet standard 82 de la scène 1 dans le buffer d'affichage d'une image. Cette septième étape 82 correspond à la première étape 71 du procédé selon l'invention 70, représenté sur la figure 7. Pour reproduire les objets standards dans le buffer d'affichage, l'application 60 utilise des méthodes de traitements d'images usuelles de la carte graphique 61 de type MSAA par exemple. Avantageusement, les méthodes de traitements d'images usuelles des cartes graphiques permettent d'afficher des objets ayant une qualité de rendu suffisante pour des objets standards. Le buffer d'affichage peut comporter un plan image. Le plan image peut lui-même comporter un plan alpha, et un plan couleur. Le plan alpha contenant les couvertures de chaque pixel, le plan couleur contenant les couleurs de chaque pixel.
Un premier ensemble d'étapes 83 permet de calculer un rendu des objets cibles dans le plan alpha. Un deuxième ensemble d'étapes 800 permet de calculer un rendu des objets cibles dans le plan couleur, RVB par exemple. Une fois le plan alpha et le plan couleur composés avec les objets cibles et les objets standard, les deux plans sont cumulés dans le buffer d'affichage. Le buffer d'affichage peut alors être projeté sur un écran. La carte graphique 61 peut, par exemple, transmettre le buffer d'affichage comportant l'image à afficher à un dispositif d'affichage.
Une huitième étape 82 du premier exemple 80 est une étape d'initialisation de la composante alpha du plan image. La composante alpha, ou le plan alpha est noté DstMasque sur la figure 8. L'initialisation du plan alpha revient à mettre à nul DstMasque : DstMasque = 0.

Ensuite pour chaque sur-échantillon 85 de chaque matrice de projection, les étapes décrites ci-après sont réalisées : une neuvième étape 86, une dixième étape 88, une onzième étape 89. Les matrices de projection ont été préalablement calculées.
Une neuvième étape 86 est une étape au cours de laquelle le plan image est centré sur la position du sur-échantillon courant. Cette étape revient à effectuer un décalage de la matrice de projection courante.
Ensuite pour chaque objet cible courant 87 les étapes suivantes sont réalisées : la dixième étape 88, la onzième étape 89.
La dixième étape 88 est une étape de rendu de l'objet cible courant par la carte graphique 61. Le rendu de l'objet cible courant est le masque de l'objet cible courant nommé SrcMasque sur la figure 8.
La onzième étape 89 est une étape de cumul des masques calculés pour chaque objet cible dans le plan alpha. Le cumul des masques s'effectue par une somme pondérée desdits masques pour chaque sur-échantillon. Une pondération est appliquée à chaque sur-échantillon. Dans l'exemple représenté sur la figure 8, chaque sur-échantillon peut avoir la même pondération : 1/NbEchantillons, NbEchantillons représentant le nombre de sur-échantillons. D'autres pondérations peuvent être appliquées comme par exemple une loi de Poisson.
Ensuite le procédé passe à un autre objet cible et reprend à la dixième étape 88. Lorsque tous les objets cibles ont été traités, le procédé passe à un sur-échantillon suivant, le sur-échantillon suivant devient le sur-échantillon courant. Et pour chaque objet cible 87 le procédé effectue les dixième et onzième étapes 88, 89. Lorsque tous les sur-échantillons ont été traités, le procédé effectue une douzième étape 801 faisant partie du rendu dans le plan couleur 800.
La douzième étape 801 est une étape de positionnement d'une fonction de cumul pour le rendu des couleurs des objets cibles par la carte graphique 61. Les couleurs des objets standards ont préalablement été rendues dans un buffer correspondant au plan couleur : DstCouleur. Le buffer DstCouleur est ensuite modifié par le calcul suivant :
DstCouteur=SrcCouteurxDsttvtasque+DstCouteurx(1-Dsttvtasque).
SrcCouleur étant la couleur des objets cibles calculées dans l'étape 806 et
DstMasque comportant le cumul des masques pondérés.

Une treizième étape 802 est une étape de positionnement d'une fonction de cumul pour le plan alpha. DstMasque est remis à nul quand un premier échantillon est rendu dans le pixel de la manière suivante : DstMasque=SrcMasqueX0+DstMasqueX0. La fonction de cumul ainsi définie évite une sur-écriture des échantillons des objets cibles dans un même pixel. Les fonctions de cumul du rendu des couleurs et de cumul dans le plan alpha, positionnées respectivement au cours de la douzième étape 801 et de la treizième étape 802 sont ensuite appliquées lors du rendu des objets cibles au cours d'une quinzième étape 806 décrite par la suite.
Pour chaque sur-échantillon 803, les étapes décrites ci-après sont réalisées : une quatorzième étape 804, une quinzième étape 806 pour un sur-échantillon courant, puis à la suite de la quinzième étape 806, le traitement repasse à la quatorzième étape 804 pour un sur-échantillon suivant, s'il existe, qui devient alors le nouveau sur-échantillon courant.
La quatorzième étape 804 est une étape au cours de laquelle le plan image est centré sur la position du sur-échantillon courant. Cette étape revient à effectuer un décalage de la matrice de projection courante.
Ensuite pour chaque objet cible courant 805 la quinzième étape 806 est réalisée.
La quinzième étape 806 permet de rendre les couleurs de l'objet cible dans le buffer d'affichage. Les couleurs et le plan alpha de l'objet cible courant sont fournies par la carte graphique et récupérées dans DstCouleur et DstMasque par l'application des fonctions de cumul du rendu des couleurs et de cumul du le plan alpha, définies respectivement au cours de la douzième étape 801 et de la treizième étape 802. Si un objet cible suivant existe, il remplace l'objet cible courant et le traitement repasse à la quinzième étape 806 jusqu'à ce que tous les objets cibles aient été traités. Lorsque tous les objets cibles ont été traités, le traitement passe à un sur-échantillon suivant le sur-échantillon courant s'il existe et recommence à la quatorzième étape 804.
Une fois tous les sur-échantillons traités, le buffer d'affichage est transmis 89 à un moyen d'affichage.

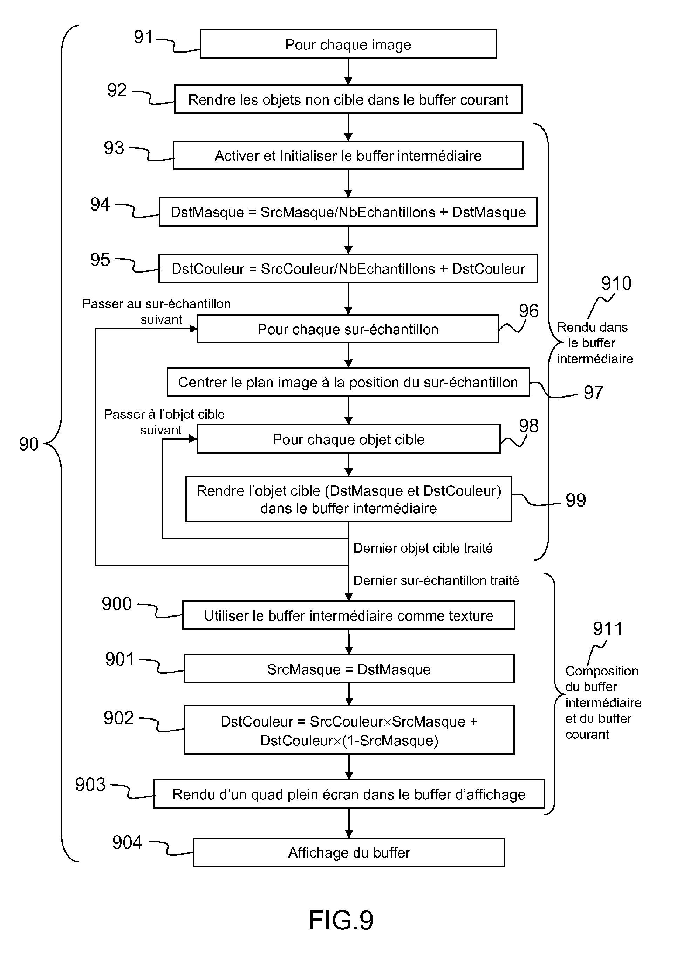

La figure 9 représente un deuxième exemple 90 de mise en oeuvre du procédé de production d'images 70 selon l'invention. Le deuxième exemple 90 utilise avantageusement une mémoire supplémentaire pour effectuer les calculs. Avantageusement, l'utilisation d'une telle mémoire supplémentaire permet de simplifier les calculs.
Pour chaque image produite 91, d'une scène à afficher, une seizième étape 92 est une étape de rendue des objets standards dans un buffer d'affichage. Le rendu des objets standards est effectué, comme au cours de la septième étape 82, par la carte graphique.
Une première partie 910 du deuxième exemple 90 permet un rendu de l'image courante dans un buffer intermédiaire. La première partie 910 du deuxième exemple peut comporter : une dix-septième étape 93, une dix-huitième étape 94, une dix-neuvième étape 95, une vingtième étape 97, une vingt-et-unième étape 99.
Une deuxième partie 911 du deuxième exemple 90 peut être une étape de composition du buffer intermédiaire avec un buffer courant. La deuxième partie 911 du deuxième exemple 90 peut comporter les étapes suivantes : une vingt-deuxième étape 900, une vingt-troisième étape 901, une vingt-quatrième étape 902, une vingt- cinquième étape 903.
Une vingt septième étape 904 correspond à une étape d'affichage du buffer d'affichage par transfert du buffer d'affichage à un moyen d'affichage.
La dix-septième étape 93 est une étape d'activation et d'initialisation du buffer intermédiaire.
La dix-huitième étape 94 est une étape de définition d'une fonction de cumul de masques de couverture dans le buffer intermédiaire : DstMasque=SrcMasque x 1/NbEchantillons+ DstMasque, NbEchantillons étant le nombre de sur-échantillons considérés.
La dix-neuvième étape 95 est une étape de définition d'une fonction de cumul de couleur dans le buffer intermédiaire :
DstCouteur=SrcCouteurx1/NbEchantillons +DstCouteurx(1-DstMasque) Ensuite pour chaque sur-échantillon 96 de chaque matrice de projection, les étapes suivantes peuvent être mise en oeuvre : la vingtième étape 97, la vingt-et-unième étape 99.

La vingtième étape 97 est une étape au cours de laquelle le plan image est centré sur la position du sur-échantillon courant. Cette étape revient à effectuer un décalage de la matrice de projection courante.
Ensuite pour chaque objet cible courant 98 la vingt-et-unième étape 99 est réalisée. Une fois l'objet cible courant traité au cours de la vingt-et-unième étape 99, un objet cible suivant devient l'objet cible courant.
La vingt-et-unième étape 99 est une étape au cours de laquelle l'objet cible est rendu dans le buffer intermédiaire. C'est-à-dire que DstMasque et DstCouleur sont mis en mémoire pour l'objet cible courant dans le buffer intermédiaire, lesdits DstMasque et DstCouleur ayant été préalablement cumulés selon les fonctions de cumul définies au cours des dix-huitième et dix-neuvième étapes 94, 95, avec les valeurs correspondantes pour DstMasque et DstCouleur, stockées dans le buffer intermédiaire.
Une fois le dernier sur-échantillon traité, le buffer intermédiaire est utilisé comme une texture au cours d'une vingt-deuxième étape 900. La texture est stockée dans le buffer d'affichage.
La vingt-troisième étape 901 est une étape d'initialisation de SrcMasque avec DstMasque.
La vingt-quatrième étape 902 suivante est une étape de calcul de DstCouleur à partir de la fonction suivante :
DstCouleur=SrcCouleurxSrcMasque+DstCouleurx(1-SrcMasque).
DstCouleur est ensuite stocké dans le buffer d'affichage.

La vingt-cinquième étape 903 est une étape de rendu en plein écran d'un quad, c'est-à-dire d'un rectangle de la taille de l'image à afficher, dans le buffer d'affichage.
Une vingt-sixième étape 904 est une étape de transmission du buffer d'affichage à un moyen d'affichage pour projeter l'image contenue dans le buffer d'affichage sur un écran, par exemple.

Le procédé selon l'invention permet d'obtenir une très haute qualité d'anti-aliasing sur des objets de la simulation, importants opérationnellement. Avantageusement l'utilisation d'un procédé MSAA sur les objets de moindre importance opérationnelle permet d'obtenir une qualité de représentation suffisante pour ces objets, tout en ne dégradant pas les performances d'affichage.
Le procédé selon l'invention permet d'obtenir des performances d'affichage compatibles avec une présentation d'images évoluant en temps réel. Avantageusement, le procédé selon l'invention est mis en oeuvre par une application de simulation utilisant une carte graphique pour générer des images en temps réel. Des objets générés par l'application de simulation, composant une scène à afficher, comportent des objets standards et des objets d'intérêt pour la simulation. Les objets standards sont traités directement par la carte graphique afin de conserver de bonnes performances dans l'affichage temps réel. Les objets d'intérêts sont traités de manière plus fine en utilisant des moyens de calculs de la carte graphique, gérée par l'application. Ainsi le procédé selon l'invention offre un compromis permettant à la fois d'obtenir des images de bonne qualité opérationnelle tout en conservant une production d'image en temps réel, garantissant ainsi la qualité de la simulation.

## Revendications

1. Procédé (70) de production d'images (62) en temps réel par une application de simulation (60) utilisant une carte graphique (61) pour générer lesdites images (62) en temps réel, lesdites images (62) comportant des objets standards et des objets d'intérêt pour la simulation,
**caractérisé en ce que** ledit procédé comporte au moins les étapes suivantes pour chaque image :
• calcul par la carte graphique des couleurs des pixels de l'image pour représenter les objets standards, stockage des couleurs des pixels pour représenter les objets standards, dans une mémoire tampon de la carte graphique (71) ;
• pour chaque objet d'intérêt :
o calcul d'au moins deux matrices de projection (72) de l'objet d'intérêt dans un plan image par l'application (60), lesdites matrices étant décalées spatialement l'une par rapport à l'autre ;
o pour chaque matrice précédemment calculée (72), calcul par la carte graphique (61) de deuxièmes masques de couverture des pixels du plan image (73) ;
o cumul par l'application (60) des deuxièmes masques de couverture des pixels de l'image par l'objet d'intérêt dans la mémoire tampon de la carte graphique (74) ;
o calcul par la carte graphique de couleurs du plan image pour les pixels représentant l'objet d'intérêt ;
o cumul (75) par l'application (60), des couleurs de l'objet d'intérêt dans la mémoire tampon de la carte graphique (61) ;
• Affichage (76) par la carte graphique (61) de la mémoire tampon.

2. Procédé selon la revendication 1, **caractérisé en ce qu'**une pondération est appliquée à chaque masque de couverture calculé pour une matrice de projection lors du cumul par l'application (60) des deuxièmes masques de couverture.

3. Procédé selon la revendication 1, **caractérisé en ce que** les matrices de projection sont spatialement décalées entre chaque image.

4. Procédé selon la revendication 1, **caractérisé en ce que** chaque matrice de projection est centrée sur un échantillonnage d'un objet cible à afficher par un pixel.
